# EUROPÄISCHE PATENTSCHRIFT

(11) **EP 2 459 905 B1**
(45) Veröffentlichungstag und Bekanntmachung des Hinweises auf die Patenterteilung: **05.09.2018**
(21) Anmeldenummer: 10720181.6
(22) Anmeldetag: 01.06.2010
(51) Int. Cl.: F16J 15/32, F16J 15/06

(54) **DICHTRING UND ANORDNUNG MIT EINEM DICHTRING**
SEALING RING AND ARRANGEMENT HAVING A SEALING RING
JOINT D'ÉTANCHÉITÉ ET AGENCEMENT DOTÉ D'UN JOINT D'ÉTANCHÉITÉ

(30) Priorität: 30.07.2009 DE 102009028139
(43) Veröffentlichungstag der Anmeldung: 06.06.2012
(73) Patentinhaber: Robert Bosch GmbH, 70442 Stuttgart (DE)
(72) Erfinder: SINGLER, Thomas, 77790 Steinach (DE); KASTINGER, Guenter, 76571 Gaggenau-Sulzbach (DE)
(86) Internationale Anmeldenummer: PCT/EP2010/057628
(87) Internationale Veröffentlichungsnummer: WO 2011/012353

(56) Entgegenhaltungen:
- EP-A1- 0 806 594
- DE-A1- 2 027 242
- DE-B3-102006 040 487
- FR-A- 1 391 410
- JP-A- 2003 343 736
- US-A- 5 575 484
- US-B1- 6 523 833

## Beschreibung

### Stand der Technik

Die Erfindung betrifft einen Dichtring nach dem Oberbegriff des Anspruchs 1.

Ein derartiger Dichtring ist bereits aus der US 6 523 833 B1 bekannt. Er ist insbesondere in eine Aufnahme eines Bauteils eingesetzt, in der er in axialer Richtung an beiden Stirnflächen kraftbeaufschlagt ist. Aufgrund der Bauteiletoleranzen, insbesondere der Toleranzen der Aufnahme ist es dabei nicht gewährleistet, dass er axial exakt eingepasst ist. Das bedeutet, dass sich entweder in axialer Richtung ein Spiel einstellt, d.h. dass sich der Dichtring in axialer Richtung verschieben lässt, oder es entsteht eine axiale Verpressung. Diese Verpressung führt zu einer Deformation des Dichtringes, sodass die erste Dichtfläche an der radialen Innenseite des Dichtrings sich ebenfalls deformieren kann, was einen negativen Einfluss auf die Dichtfunktion zur Folge hat. Im Extremfall bedeutet dies, dass eine Abdichtung einer Welle beispielsweise nicht sicher gewährleistet werden kann.

### Offenbarung der Erfindung

Ausgehend von dem dargestellten Stand der Technik liegt der Erfindung die Aufgabe zugrunde, einen Dichtring nach dem Oberbegriff des Anspruchs 1 derart weiterzubilden, dass dieser in axialer Richtung in der Aufnahme fixiert positionierbar ist und eine etwa stattfindende Deformation des Dichtrings in axialer Richtung keinen negativen Einfluss auf die Dichtfunktion der ersten Dichtfläche hat. Diese Aufgabe wird bei einem Dichtring mit den Merkmalen des Anspruchs 1 gelöst. Der Erfindung liegt dabei die Idee zugrunde, dass an wenigstens einer der beiden Stirnseiten des Dichtrings ein zumindest teilweise in axialer Richtung elastisch verformbarer Ausgleichsbereich angeordnet ist. Dieser axiale Ausgleichsbereich bewirkt, dass eine axiale Verschiebung des Dichtringes in der Aufnahme bei den üblicherweise vorgesehenen Bauteiletoleranzen nicht mehr stattfindet und, dass durch den wenigstens einen Ausgleichsbereich axiale Druckkräfte aufgenommen werden können, die zu keiner Deformation des den zweiten Dichtbereich tragenden Mittelbereichs des Dichtrings führen.

Vorteilhafte Weiterbildungen des erfindungsgemäßen Dichtrings sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Erfindungsgemäß ist es vorgesehen, dass zwei zueinander axial beabstandete zweite Dichtflächen vorgesehen sind, die an einem mittleren Bereich angeordnet sind, und dass sich der wenigstens eine Ausgleichsbereich in axialer Richtung an den Mittelbereich anschließt. Dadurch lassen sich eine besonders gute Dichtwirkung und eine radial gleichmäßige Belastung des Dichtrings erzielen.

Um eine Deformation des mittleren Bereichs auch bei einem relativ flexibel ausgebildeten mittleren Bereich auszuschließen, ist es erfindungsgemäß vorgesehen, dass der Ausgleichsbereich im Bereich einer in Längsrichtung verlaufenden Mittelachse des mittleren Bereichs angeordnet ist. Dadurch können beim Auftreten von axialen Kräften auf den Dichtring keine Kippmomente bzw. Querkräfte erzeugt werden, die den mittleren Bereich deformieren. Erfindungsgemäß ist es vorgesehen, dass an beiden Stirnseiten des Dichtrings jeweils ein Ausgleichsbereich angeordnet ist. Dadurch lassen sich axiale Kräfte auf zwei Ausgleichsbereiche übertragen, sodass eine besonders gute Federwirkung der Ausgleichsbereiche erzielt wird. Ferner können dann beim plötzlichen Auftreten von Axialkräften aus einer der beiden Axialrichtungen diese von dem jeweiligen Ausgleichselement aufgenommen werden, bevor es zu einer axialen Verschiebung des Dichtrings in der Aufnahme kommt.

Eine besonders gute Anpassung der ersten Dichtfläche an das abzudichtende Element, beispielsweise eine Welle, lässt sich erfindungsgemäß bewirken, wenn die erste Dichtfläche an einer vom mittleren Bereich radial nach innen ragenden und radial elastisch federnden Dichtlippe angeordnet ist.

Die axiale Verformbarkeit des Ausgleichsbereichs wird erfindungsgemäß sichergestellt, wenn der wenigstens eine Ausgleichsbereich eine Breite aufweist, die geringer ist als die Breite des mittleren Bereichs.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Anordnung eines Dichtrings gemäß dem Stand der Technik in einem Teillängsschnitt,
- Fig. 2: einen erfindungsgemäßen Dichtring in einer perspektivischen Ansicht,
- Fig. 3: einen Ausschnitt des Dichtrings der Fig. 2 in geschnittener Darstellung und
- Fig. 4: einen Teillängsschnitt durch eine Anordnung mit einem erfindungsgemäßen Dichtring gemäß der Fig. 2.

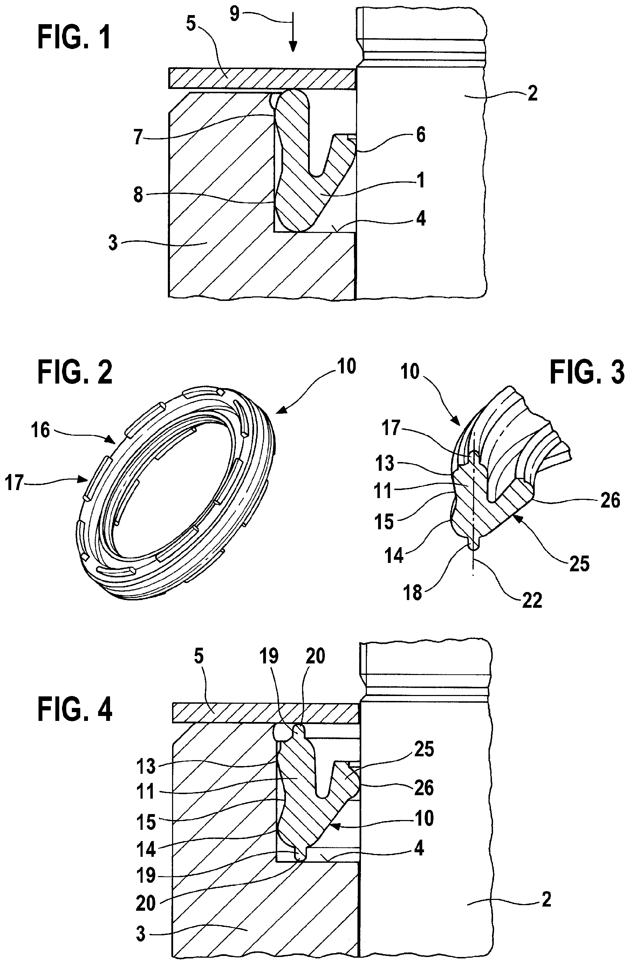

In der Fig. 1 ist eine Anordnung mit einem Dichtring 1 gemäß dem Stand der Technik dargestellt. Der Dichtring 1 dient dabei beispielhaft der Abdichtung einer Welle 2, die an ihrem Umfang von einer Exzenterbuchse 3 umfasst ist. In der Exzenterbuchse 3 ist beispielhaft eine im Teillängsschnitt L-förmige Aufnahme 4 ausgebildet, die den Dichtring 1 radial umfasst und diesen auch in axialer Richtung aufnimmt. In axialer Richtung schließt sich an die Exzenterbuchse 3 eine Ausgleichsscheibe 5 an.

Der Dichtring 1 weist eine radial innen angeordnete erste Dichtfläche 6 sowie zwei radial außen angeordnete und axial zueinander beabstandete zweite Dichtflächen 7 und 8 auf. In der Fig. 1 ist der Fall dargestellt, bei dem der Dichtring 1 etwas über die Aufnahme 4 in der Exzenterbuchse 3 herausragt. Bei dem axialen Fügen der Ausgleichsscheibe 5 mit der Exzenterbuchse 3 kann es daher vorkommen, dass der Dichtring 1 in Richtung des Pfeils 9 in axialer Richtung mit einer Kraft beaufschlagt wird, die zu einer Deformation des Dichtrings 1 führt. Diese Deformation kann in Folge auch zu einer Deformation des Bereichs des Dichtrings 1 führen, an der die erste Dichtfläche 6 angeordnet ist.

Für den Fall, dass aufgrund der Bauteiletoleranzen, insbesondere der Exzenterbuchse 3, diese eine Höhe im Bereich der Aufnahme 4 aufweist, die größer ist als die axiale Erstreckung des Dichtrings 1, kann es im Gegensatz dazu kommen, dass der Dichtring 1 in der Aufnahme 4 zwar vollständig angeordnet ist, dieser dort jedoch keine axial eindeutig definierte Position einnimmt.

In den Fig. 2 und 3 ist nunmehr ein erfindungsgemäßer Dichtring 10 dargestellt. Der Dichtring 10 weist einen mittleren Bereich 11 auf, an dessen radial außen betrachteter Seite die beiden zweiten Dichtflächen 13 und 14 axial voneinander beabstandet angeordnet sind. Zwischen den beiden Dichtflächen 13 und 14 ist am Außenumfang des Dichtrings 10 eine Einschnürung 15 ausgebildet. Aufgrund der Einschnürung 15 wird gewährleistet, dass der Dichtring 10 an seinem Außenumfang lediglich an den beiden zweiten Dichtflächen 13 und 14 in einer Aufnahme eines Aufnahmekörpers anliegt. An den mittleren Bereich 11 schließt sich, in axialer Richtung des Dichtrings 10 betrachtet, jeweils ein Ausgleichsbereich 17, 18. Jeder Ausgleichsbereich 17, 18 weist einen im Querschnitt rechteckigen ersten Bereich 19 auf, an den sich ein im Querschnitt halbkreisförmiger zweiter Bereich 20 anschließt. Die zweiten Bereiche 20 bilden hierbei Anlageflächen aus. Weiterhin liegen die beiden Ausgleichsbereiche 17 und 18 im Bereich einer Mittelachse 22 des mittleren Bereichs 11.

Wie insbesondere anhand der Fig. 2 erkennbar ist, können die beiden Ausgleichsbereiche 17, 18, oder auch nur einer der Ausgleichsbereiche 17, 18 in radialer Richtung mit Unterbrechungen 16 ausgebildet sein, so dass die Ausgleichsbereiche 17 bzw. 18 segmentartig angeordnet sind. Dadurch können eventuelle Verformungen besser ausgeglichen werden bzw. es werden homogene Druckverteilungen erzielt.

An den mittleren Bereich 11 ist auf der radial nach innen ragenden Seite eine Dichtlippe 25 angeformt, die auf ihrer radial nach innen ragenden Seite die erste Dichtfläche 26 trägt.

In der Fig. 4 ist nunmehr die Anordnung gemäß der Fig. 1 dargestellt, jedoch unter Verwendung eines erfindungsgemäßen Dichtrings 10. Hierbei liegt die Ausgleichsscheibe 5 vollständig auf der einen Stirnseite der Exzenterbuchse 3 auf. Dies führt zu einem Anlagekontakt der beiden Ausgleichsbereiche 17 und 18 des Dichtrings 10 mit der entsprechenden Stirnseite der Ausgleichsscheibe 5 bzw. dem Boden der Aufnahme 4. Von beiden axialen Richtungen werden daher Axialkräfte auf den Dichtring 10 ausgeübt, welche jedoch von den beiden Ausgleichsbereichen 17 und 18 aufgenommen werden, indem sich diese Bereiche elastisch verformen, und somit eine Verformung des mittleren Bereichs 11 ausschließen.

## Patentansprüche

1. Dichtring (10), mit einer an seinem Innenumfang angeordneten ersten Dichtfläche (26) und wenigstens einer an seinem Außenumfang
angeordneten zweiten Dichtfläche (13, 14), wobei an beiden Stirnseiten des Dichtrings (10) ein zumindest teilweise in axialer Richtung elastisch verformbarer Ausgleichsbereich (17, 18) angeordnet ist, wobei zwei zueinander axial beabstandete zweite Dichtflächen (13, 14) vorgesehen sind, die an einem mittleren Bereich
(11) angeordnet sind, wobei sich der wenigstens eine Ausgleichsbereich (17, 18) in axialer Richtung an den mittleren Bereich
(11) anschließt, und wobei der wenigstens eine Ausgleichsbereich (17, 18) im Bereich einer in Längsrichtung verlaufenden Mittelachse (22) des mittleren Bereichs (11) angeordnet ist,
wobei
die erste Dichtfläche (26) an einer vom mittleren Bereich (11) radial nach innen ragenden und radial elastisch federnden Dichtlippe (25) angeordnet ist, und dass die erste Dichtfläche (26) in axialer Richtung betrachtet in etwa mittig zwischen den beiden zweiten Dichtflächen (13, 14) angeordnet ist,
**dadurch gekennzeichnet, dass**
dass der wenigstens eine Ausgleichsbereich (17, 18) eine Breite aufweist, die geringer ist als die Breite des mittleren Bereichs (11), und dass der Ausgleichsbereich (17, 18) einen rechteckförmigen ersten Bereich (19) aufweist, an den sich ein im Querschnitt halbkreisförmiger zweiter Bereich (20) anschließt.

2. Dichtring nach Anspruch 1,
**dadurch gekennzeichnet,**
**dass** der wenigstens eine Ausgleichsbereich (17, 18) einen Anlagebereich (20) aufweist.

3. Dichtring nach einem der Ansprüche 1 bis 2, **dadurch gekennzeichnet, dass** wenigstens einer der Ausgleichsbereiche (17, 18) segmentartig ausgebildet ist, so dass zwischen den einzelnen Abschnitten der Ausgleichsbereiche (17, 18) Freiräume (16) ausgebildet sind.

4. Anordnung mit einem Dichtring (10) nach einem der Ansprüche 1 bis 3 und Begrenzungselementen (3,5), **dadurch gekennzeichnet, dass** der Dichtring (10) axial beidseitig von den Begrenzungselementen (3, 5) kraftbeaufschlagt ist.

## Claims

1. Sealing ring (10) having a first sealing surface (26) arranged on the inner circumference thereof and at least one second sealing surface (13, 14) arranged on the outer circumference thereof, wherein a compensation region (17, 18), which can be at least partially deformed in an elastic manner in the axial direction, is arranged on both end faces of the sealing ring (10), wherein two second sealing surfaces (13, 14) which are spaced apart in an axial manner and are arranged on a central region (11) are provided, wherein the at least one compensation region (17, 18) connects to the central region (11) in the axial direction, and wherein the at least one compensation region (17, 18) is arranged in the region of a central axis (22) of the central region (11), said central axis extending in the longitudinal direction, wherein the first sealing surface (26) is arranged on a sealing lip (25) which projects radially inwards from the central region (11) and is elastically resilient in a radial manner, and that the first sealing surface (26), when viewed in the axial direction, is arranged approximately centrally between the two second sealing surfaces (13, 14), **characterized in that**
the at least one compensation region (17, 18) has a width which is smaller than the width of the central region (11), and **in that** the compensation region (17, 18) has a rectangular first region (19), to which connects a second region (20) which is semi-circular in cross section.

2. Sealing ring according to Claim 1, **characterized in that** the at least one compensation region (17, 18) has a contact region (20).

3. Sealing ring according to one of Claims 1 to 2, **characterized in that** at least one of the compensation regions (17, 18) is realized in the manner of a segment such that free spaces (16) are realized between the individual sections of the compensation regions (17, 18).

4. Arrangement having a sealing ring (10) according to one of Claims 1 to 3 and limiting elements (3, 5), **characterized in that** the sealing ring (10) is acted upon with force on both sides in an axial manner by the limiting elements (3, 5).

## Revendications

1. Bague d'étanchéité (10) comprenant une première surface d'étanchéité (26) disposée sur son pourtour intérieur et au moins une deuxième surface d'étanchéité (13, 14) disposée sur son pourtour extérieur, une zone de compensation (17, 18) déformable par effet élastique au moins partiellement dans le sens axial étant disposée sur les deux côtés frontaux de la bague d'étanchéité (10), deux deuxièmes surfaces d'étanchéité (13, 14) espacées l'une de l'autre dans le sens axial étant présentes, lesquelles sont disposées au niveau d'une zone centrale (11), l'au moins une zone de compensation (17, 18) se rattachant à la zone centrale (11) dans le sens axial, et l'au moins une zone de compensation (17, 18) étant disposée dans la zone d'un axe central (22) de la zone centrale (11) qui s'étend dans la direction longitudinale,
la première surface d'étanchéité (26) étant disposée sur une lève d'étanchéité (25) faisant saillie dans le sens radial vers l'intérieur depuis la zone centrale (11) et à flexibilité élastique dans le sens radial, et que la première surface d'étanchéité (26), vue dans le sens axial, ést disposée approximativement au centre entre les deux deuxièmes surfaces d'étanchéité (13, 14),
**caractérisée en ce que**
l'au moins une zone de compensation (17, 18) possède une largeur qui est inférieure à la largeur de la zone centrale (11) et **en ce que** la zone de compensation (17, 18) possède une première zone rectangulaire (19) à laquelle se rattache une deuxième zone (20) ayant une section transversale en forme de demi-cercle.

2. Bague d'étanchéité selon la revendication 1, **caractérisée en ce que** l'au moins une zone de compensation (17, 18) possède une zone d'application (20) .

3. Bague d'étanchéité selon l'une des revendications 1 à 2, **caractérisée en ce qu'**au moins l'une des zones de compensation (17, 18) est réalisée sous la forme de segments, de sorte que des espaces libres (16) sont formés entre les portions individuelles des zones de compensation (17, 18).

4. Arrangement comprenant une bague d'étanchéité (10) selon l'une des revendications 1 à 3 et des éléments de délimitation (3, 5), **caractérisé en ce que** les éléments de délimitation (3, 5) exercent une force sur la bague d'étanchéité (10) des deux côtés dans le sens axial.
